# EUROPEAN PATENT APPLICATION

(11) **EP 1 471 106 A1**
(43) Date of publication of application: **27.10.2004**
(21) Application number: 04009467.4
(22) Date of filing: 22.04.2004
(51) Int. Cl.: C08J 9/35, C08J 9/24, C08L 79/08

(54) **Foamed polyimide shaped article and process for production of same**

(30) Priority: 25.04.2003 JP 2003121373; 30.03.2004 JP 2004099270
(71) Applicant: Ube Industries, Ltd., Ube-shi, Yamaguchi-ken 755-8633 (JP)
(72) Inventor: Ryoichi, Sato, c/o Tokyo Head Office, 2-1 Shibaura 1-chome Minato-ku Tokyo (JP); Tsumiyama, Tatsuo, c/o Ube Chemical Factory, Ube-shi Yamaguchi-ken (JP); Sakai, Yoshinobu, Tokyo 108-0014 (JP); Ozawa, Hideki, c/o Polymer Research Laboratory, Ichihara-shi Chiba-ken (JP); Aoki, Fumio, c/o Polymer Research Laboratory, Ichihara-shi Chiba-ken (JP)
(74) Representative: HOEGER, STELLRECHT & PARTNER Patentanwälte

(57) **Abstract**

A foamed polyimide shaped article having heat resistance and molded to any shape obtained by molding and then calcining a mixture of pulverized pieces of a pre-foamed polyimide resin mass and a heat resistant binder and a process for production of the same comprising pulverizing a pre-foamed polyimide resin mass, mixing the pulverized pieces with a heat resistant binder, molding the mixture to a predetermined shape, then calcining it at a temperature of at least 350°C to cure the binder and strongly bond the polyimide foam mass.

## Description

### BACKGROUND OF THE INVENTION

### 1. Field of the Invention

The present invention relates to a foamed polyimide shaped article and a process for production of the same, more particularly relates to a foamed polyimide shaped article having heat resistance and molded into any shape and a process for production of the same.

### 2. Description of the Related Art

In the past, as a foam, a urethane-based, polystyrene-based, or polyolefin-based one has been well known. When making shaped articles from these foams, the foam is converted into chips and utilized again as cushions for seats or industrial insulating materials by being shaped with a binder. These foamed shaped articles have heat resistances of about 100°C and therefore have been limited in range of used temperature.

Therefore, an industrial heating insulating foam material having a heat resistance enabling use at a high temperature, in particular a temperature of at least 300°C, has been sought. Therefore, a polyimide-based article has been studied as a heat resistant foam and a polyimide shaped article has been proposed (U.S. Patent No. 4,241,193, Japanese Unexamined Patent Publication (Kokai) No. 61-195126, Japanese Unexamined Patent Publication (Kokai) No. 1-313537, Japanese Unexamined Patent Publication (Kokai) No. 2-24326, and Japanese Unexamined Patent Publication (Kokai) No. 4-211440).

Such foamed polyimide shaped articles, however, are obtained by simultaneous foaming and molding. There are therefore limits on the shapes and sizes and limits on the applications of the polyimide foamed shaped articles.

### SUMMARY OF THE INVENTION

An object of the present invention is to provide a foamed polyimide shaped article having heat resistance and molded to any shape and a process for production of the same.

To attain the above object, according to a first aspect of the invention, there is provided a foamed polyimide shaped article having heat resistance and molded to any shape obtained by molding and then calcining a mixture of pulverized pieces of a pre-foamed polyimide resin mass and a heat resistant binder. According to a second aspect of the invention, there is provided a process for production of the same comprising pulverizing a pre-foamed polyimide resin mass, mixing the pulverized pieces with a heat resistant binder, molding the mixture to a predetermined shape, then calcining it at a temperature of at least 350°C to cure the binder and strongly bond the pieces of polyimide foam. In this specification, a heat resistant binder means one where no deterioration is substantially recognized after a heat treatment test at 300°C for 60 minutes.

According to the present invention, it is possible to obtain a foamed polyimide shaped article light in weight, high in heat resistance, and superior in cushioning and heat insulation. The foamed polyimide shaped article is also superior in audio characteristics. According to the method of the present invention, it is possible to produce foamed polyimide having the above features and molded to any shape by a simple operation.

### BRIEF DESCRIPTION OF THE DRAWINGS

These and other objects and features of the present invention will become clearer from the following description of the preferred embodiments given with reference to the attached drawings, wherein:

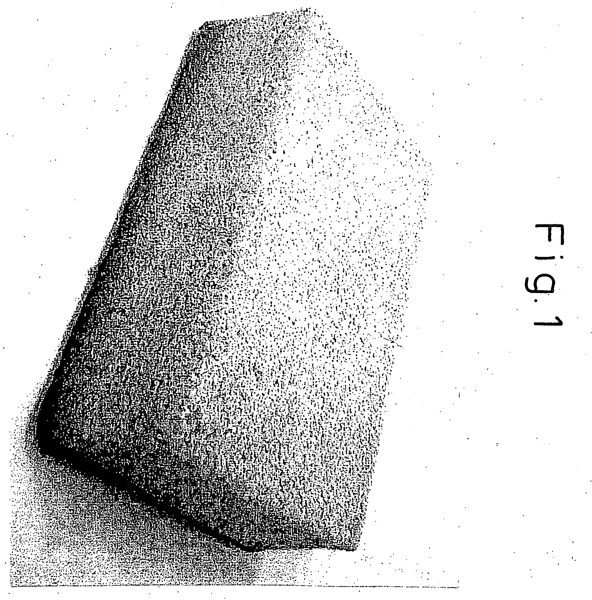

FIG. 1 is a photograph of a foamed polyimide shaped article placed on a table as an example of the present invention,
FIG. 2 is a view showing the dimensions of a foamed polyimide shaped article obtained in an example of the invention constituted by Example 5, and

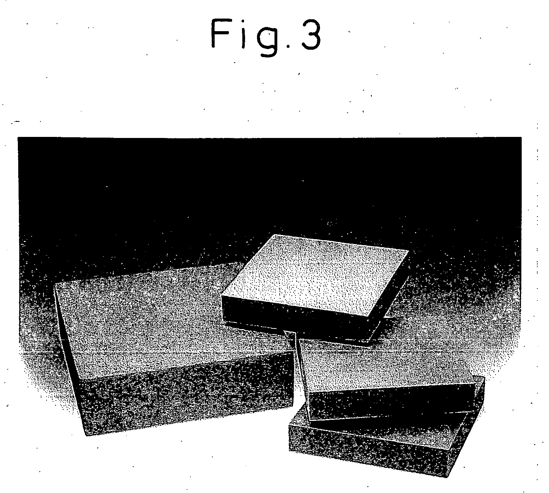

Fig. 3 is another photograph of foamed polyimide shaped articles as examples of the present invention.

### DESCRIPTION OF THE PREFERRED EMBODIMENTS

Preferred embodiments of the present invention are described below:
1) The foamed polyimide shaped article wherein the pre-foamed polyimide resin mass is comprised of a polymer obtained using as an essential component a 2,3,3',4'-biphenyl tetracarboxylic acid component as an aromatic tetracarboxylic acid component.
2) The foamed polyimide shaped article wherein the pre-foamed polyimide resin mass is obtained using as a diamine component a diamine having two amino groups in a molecule or an amine compound comprised of a mixture of diamine having two groups and ones having three or more groups.
3) The foamed polyimide shaped article wherein said heat resistant binder is an end-modified imide oligomer.
4) The foamed polyimide shaped article wherein said heat resistant binder is an end-modified imide oligomer obtained by reacting a biphenyl tetracarboxylic acid, an aromatic diamine compound, and 4-(2-phenylethynyl)anhydrous phthalic acid and having a logarithmic viscosity (ηinh, 30°C, 0.5 g/100 ml solvent, solvent: N-methyl-2-pyrrolidone) of 0.05 to 1.
5) The foamed polyimide shaped article wherein the heat resistant binder is an end-modified imide oligomer of the formula: 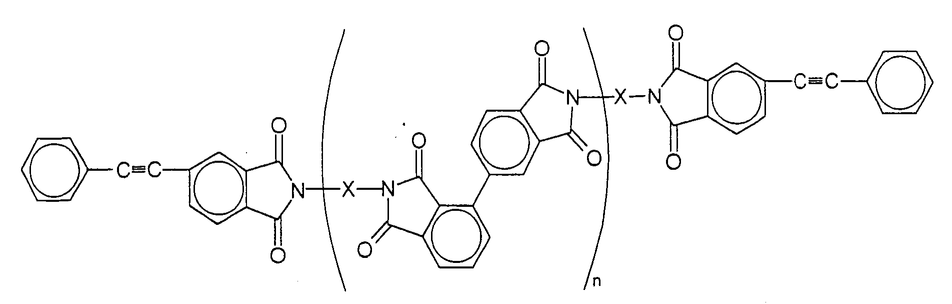 (wherein, X is an aromatic diamine residual group and n is an integer).
6) The foamed polyimide shaped article wherein the heat resistant binder has a melt viscosity at the temperature of use of 1 to 1000000 poise.
7) The foamed polyimide shaped article wherein the heat resistant binder has a glass transition temperature (Tg) of at least 300°C after calcining (curing by heating) and a flexural strength of at least 1300 kgf/cm².
8) The foamed polyimide shaped article wherein the heat resistant binder is mixed into the pulverized pieces of the pre-foamed polyimide resin mass at a ratio of 2 to 30 wt%.
9) The foamed polyimide shaped article having a heat resistance free from changes in appearance after a heat resistance test at 300°C for 60 minutes.
10) The foamed polyimide shaped article wherein the density is 0.01 to 0.8 g/cm³.
11) The process for production of a foamed polyimide shaped article wherein the heat resistant binder has a melt viscosity at the temperature of use of 1 to 1000000 poise.
12) The process for production of a foamed polyimide shaped article wherein the heat resistant binder is a polyamic acid obtained using as an essential component a 2,3,3',4'-biphenyl tetracarboxylic acid component as an aromatic tetracarboxylic acid component.
13) The process for production of a foamed polyimide shaped article wherein the pre-foamed polyimide resin mass has a density of 0.0005 to 0.1 g/cm³.

In the present invention, the pre-foamed polyimide resin mass preferably is obtained by evaporating to dryness a polyimide foam precursor mixture containing a half ester of an aromatic tetracarboxylic acid obtained by reacting an aromatic tetracarboxylic acid dianhydride and an alcohol, diamine, and an alcohol, powdering it, then premolding it to prepare a suitable green body and further heating it to cause foaming. Before this heating, it is also possible to perform microwave heating.

As the aromatic tetracarboxylic acid dianhydride, 2,3,3',4'-biphenyl-tetracarboxylic acid dianhydride, 3,3',4,4'-biphenyl-tetracarboxylic acid dianhydride, pyromellitic acid dianhydride, 3,3',4,4'-benzophenone-tetracarboxylic acid dianhydride, bis(3,4-dicarboxyphenyl)ether dianhydride, 2,3,6,7-naphthalene-tetracarboxylic acid dianhydride, 1,2,5,6-naphthalene-tetracarboxylic acid dianhydride, 1,2,4,5-naphthalene-tetracarboxylic acid dianhydride, 1,4,5,8-naphthalene-tetracarboxylic acid dianhydride, 2,2-bis(2,5-dicarboxyphenyl)propane dianhydride, 1,1-bis(2,3-dicarboxyphenyl)ethane dianhydride, 1,1-bis(3,4-dicarboxyphenyl)sulfonic acid dianhydride, 1,3-bis(3,4-dicarboxyphenyl)-1,1,3,3-tetramethyl-disiloxane dianhydride, etc. may be mentioned. In particular, 2,3,3',4'-biphenyl-tetracarboxylic acid dianhydride is preferably contained in an amount of at least 50%.

As the diamine, up to two aromatic diamines may be used as main components. By this, a Tg of foamed polyimide of at least 300°C can be easily reached. The poly-substituted amine component is not essential, but is preferably partially included for preventing shrinkage of the foam at a high temperature and increasing the foam strength (resistance to cracks in foam). Diamine disiloxane acts like a surfactant. To ensure uniform foam, a range of 0.1 to 10 mol%, preferably 0.2 to 5 mol% is necessary. In small amounts, uniform foaming is difficult, while in large amounts, a drop in Tg or a drop in thermal stability is invited.

As the polyimide foam precursor mixture, preferably a half ester of 2,3,3',4'-biphenyl-tetracarboxylic acid dianhydride (hereinafter sometimes abbreviated as a-BPDA), an aromatic diamine, for example, p-phenylene diamine (hereinafter sometimes abbreviated as PPD), and/or 4,4'-diaminodiphenyl ether (hereinafter sometimes abbreviated as ODA), and an component for realizing uniform foaming, for example, diamino disiloxane, and further if necessary an amine compound having at least three amino groups in a molecule, for example, an aromatic triamine compound or aromatic tetraamine compound, in particular tetraaminobiphenyl, may be uniformly mixed and dissolved with an esterification solvent, for example, methanol, ethanol, n-propanol, n-butanol, or other lower primary alcohol, preferably methanol or ethanol to obtain a mixture having a ratio of nonvolatile components in the total weight of 10% to 50% or so.

The polyimide foam precursor mixture may have 1,2-dimethylimidazole, benzimidazole, isoquinoline, substituted pyridine, or another imidization catalyst added to it. Further, it is also possible to add another known additive, for example, an inorganic filler, an inorganic or organic pigment, etc.

In the step of evaporating to dryness the mixture and powdering it, it is possible to use an evaporator on the laboratory scale or a spray drier etc. on an industrial scale. The evaporation temperature is lower than 100°C, preferably held at not higher than 80°C. With high temperature drying, the foamability drops sharply. The drying may be performed at ordinary temperature, under pressure, or under vacuum.

In the step of molding the suitable green body, for example, it is for example compression molded at room temperature, flow cast and dried as a slurry solution, and filled in a container inert to microwaves. At this time, the lid need not be attached (that is, it is not necessary to completely fasten it). If the green body is substantially uniform in state, uniformity at the time of foaming can be achieved.

The heating by microwave heating is in general preferably performed at about 2.45 GHz under Japanese law for example. It is preferable to aim at the microwave output per weight powder. This should be defined by repeated experiments. For example, foaming is started at a rate of 100 g/l kW or so for about 1 minute. The foaming winds up in 2 to 3 minutes. In this state, the foam is extremely brittle.

Next, the microwave heated article is gradually raised in temperature from about 200°C by heating by hot air etc (as one target, a rate of rise of temperature of 100°C/10 min or so). Finally, it is heated to a temperature of the glass transition temperature (Tg) of the polyimide produced + α by the heating for 5 to 60 min, preferably for 10 min. Due to the heating and foaming by the above steps, the shape becomes indeterminate

In the above process, the polyimide precursor in the solid state is preferably heated in two stages of heating for foaming and heating for heat fixing (increasing the molecular weight). Further, in the process for production of a polyimide foam, the heating for foaming is preferably performed by microwave heating so improve the uniformity of heating. Further, the heating for heat fixing (increasing the molecular weight) is preferably performed by heating to a temperature of at least the glass transition temperature (Tg) of the polyimide foam, preferably a temperature of not more than 500°C higher than 310°C, for 5 to 60 minutes.

In the present invention, the pre-foamed polyimide resin mass obtained by the above foaming step can be adjusted to any expansion rate, but preferably it has a density of 0.0005 to 0.1 g/cm³.

In the present invention, the pre-foamed polyimide resin mass is pulverized, the pulverized pieces are mixed with a heat resistant binder, the mixture is charged into a mold having a predetermined shape, then this is pressed and calcined to a predetermined density so as to obtain a foamed polyimide shaped article.

The method for pulverizing the polyimide resin foam mass in the above process is not particularly limited. For example, it is possible to suitably use a crusher for plastic shaped articles. By the above method, it is preferable to obtain pulverized pieces of a size of a diameter of about 1 mm to 50 mm converted to a sphere (i.e., a maximum diameter) from the polyimide resin foam mass.

In the present invention, it is important to mix the pulverized pieces with a heat resistant binder. As the heat resistant binder, a polyamic acid is preferred from the need of maintaining the heat resistance of the polyimide and functioning as a binder. In particular, as a polyamic acid for a binder, a polyamic acid obtained from an aromatic tetracarboxylic acid component, preferably an asymmetric aromatic tetracarboxylic acid component and aromatic diamine, or a polyamic acid obtained from an aromatic tetracarboxylic acid component and meta-substituted aromatic diamine or other polyamic acid giving a heat resistant heat fusing polyimide is suitable. In this method, the polyamic acid of the binder may be used in a powdered state of polyamic acid or may be used in a solvent solution. When used as a solvent solution of polyamic acid, the concentration of the polyamic acid is suitably about 1 to 20 wt% or so.

As the aromatic tetracarboxylic acid component, 3,3',4,4'-biphenyl-tetracarboxylic acid dianhydride, 3,3',4,4'-benzophenone-tetracarboxylic acid dianhydride, 2,3,3',4'-biphenyl-tetracarboxylic acid dianhydride, 1,2,3',4'-benzophenone-tetracarboxylic acid dianhydride, 1,2,3',4'-diphenyl ether-tetracarboxylic acid dianhydride, 1,2,3',4'-diphenylmethane-tetracarboxylic acid dianhydride, or acids or esters of the same, preferably an asymmetric aromatic tetracarboxylic acid component, for example, 2,3,3',4'-biphenyl-tetracarboxylic acid dianhydride, 1,2,3',4'-benzophenone-tetracarboxylic acid dianhydride, 1,2,3',4'-diphenyl ether-tetracarboxylic acid dianhydride, 1,2,3',4'-diphenylmethane-tetracarboxylic acid dianhydride or acids or esters of the same, in particular 2,3,3',4'-biphenyl-tetracarboxylic acid dianhydride may be mentioned.

The aromatic diamine reacted with the aromatic tetracarboxylic acid component is not particularly limited, but an aromatic diamine having three to four benzene rings, for example, 1,3-bis(4-aminophenoxybenzene), 1,3-bis(4-aminophenoxy)biphenyl, preferably 1,3-bis(4-aminophenoxybenzene) may be mentioned. It is also possible to replace up to 80 mol% of the asymmetric aromatic tetracarboxylic acid dianhydride with a symmetric aromatic tetracarboxylic acid component or possible to replace up to 80 mol% of the aromatic diamine having three to four benzene rings with an aromatic diamine having one to two benzene rings.

As the heat resistant binder, due to the need to maintain the heat resistance of the polyimide and function as a binder, an end-modified imide oligomer is preferable. An end-modified imide oligomer obtained by reacting a biphenyl-tetracarboxylic acid, an aromatic diamine compound, and 4-(2-phenylethynyl)anhydrous phthalic acid and having a logarithmic viscosity (ηinh, 30°C, 0.5 g/100 ml solvent, solvent: N-methyl-2-pyrrolidone) of 0.05 to 1 is more preferable. As the biphenyl-tetracarboxylic acid, 2,3,3',4'-biphenyl-tetracarboxylic acid dianhydride or 2,2' ,3,3'-biphenyl-tetracarboxylic acid dianhydride is suitable.

In this method, the amount of the heat resistant binder used is preferably 2 to 30 parts by weight with respect to 100 parts by weight of pulverized pieces of polyimide resin foam mass converted to solid content. The method of mixing the pulverized pieces of polyimide resin foam mass and heat resistant binder is not particularly limited. For example, the method of mixing the pulverized pieces of the polyimide resin foam mass and powder of the heat resistant binder by a kneader or the method of spraying a solution of a heat resistant binder to the pulverized pieces of polyimide resin foam mass may be mentioned.

In the present invention, it is possible to charge a mixture of pulverized pieces of a polyimide foam mass and heat resistant binder into a mold having a predetermined shape, then pressing and calcining the same under a predetermined density so as to obtain a foamed polyimide shaped article. The "calcining" includes curing by heating. As the mold, one made of a heat resistant material, for example, a metal, preferably a stainless steel mold can be used.

The pressing and calcining are preferably performed for example by charging pulverized pieces of polyimide resin foam mass into which a heat resistant binder is mixed into a stainless steel mold provided with a gas vent, compressing it to predetermined dimensions (for example, height) by a pressing lid, fixing the pressing lid, then placing it for 10 to 120 minutes in an oven heated to a temperature of at least 250°C and not more than the glass transition temperature of the polyimide foam, preferably at least 300°C to not more than 400°C.

The polyimide shaped article of the present invention preferably has no change in appearance or has a heat resistance having a loss in mass of not more than 1%, in a heat resistance test at 300°C for 60 minutes. Further, the foamed polyimide shaped article of the present invention has a density of 0.01 to 0.8 g/cm³ depending on the molding conditions selected. Further, the foamed polyimide shaped article preferably has a density of 1.2 to 20 times the pre-foamed polyimide resin mass and pulverized pieces of the same. The polyimide shaped article of the present invention preferably has a tensile strength of not less than 10 PKa, more preferably of not less than 25 PKa. Further, the foamed polyimide shaped article of the present invention can be made a foamed polyimide shaped article of any of a sheet shape, pipe shape, column shape, cube shape, or box shape depending on the mold selected. In particular, it may be made a foamed polyimide shaped article of a pipe shape having an inside diameter of 10 to 1000 mm and outer diameter of 15 to 2000 mm or a block shape having sides A, B, and C, where A, B, and C are independently from 10 to 3000 mm.

The methods of measurement of the physical properties in the examples and comparative example are shown below:
Glass transition temperature: Measured using a DSC (DSC 220C made by Seiko Electronic) in an N₂ atmosphere at a temperature raising rate of 20°C/min.
Foaming rate: Calculated from true density/apparent density.
   For the true density, the value found by preparing a polyimide film of the same composition by an ordinary method and measuring it using a density gradient tube was used.
   For the apparent density, the value found by cutting a sample into a cubic shape or square sheet shape, measuring it by calipers to find the volume, and weighing it by scales and dividing the mass by volume.
Tensile strength: Measuring by cutting out a strip shaped sample of 150 mmL x 25 mmW x 10 mmT, using a Tensilon tensile tester (made by Orientec), and at a tensile rate of 10 mm/min.
Tensile elongation: Measured using a sample, measurement system, and measurement conditions the same as in the tensile strength measurement test.
Heat resistance test: Finds changes in appearance and mass after standing in an oven for 60 minutes

In the following description, the abbreviations mean the following compounds:
a-BPDA: 2,3,3',4'-biphenyl-tetracarboxylic acid dianhydride
BTDA: 3,3',4,4'-benzophenone-tetracarboxylic acid dianhydride
PPD: p-phenylene diamine
ODA: 4,4'-diaminodiphenyl ether
TPE-R: 1,3-bis(4-aminophenoxy)benzene
DADSi: 1,3-bis(3-aminopropyl)tetramethyl disiloxane
DMZ: 1,2-dimethyl imidazole
PEPA: 4-(2-phenylethynyl)anhydrous phthalic acid

### Example 1

A 500 ml eggplant-shaped flask was charged with 180 mmol of a-BPDA, 70 g of methanol, and 2.44 g of DMZ as a catalyst. The contents were heated and stirred for 90 minutes while being refluxed in a 90°C oil bath to obtain a homogeneous solution. Next, the solution was cooled to not higher than 30°C, then 189 mmol of PPD, 2 mmol of DADSi, and 30 g of methanol were added to obtain a homogeneous solution. The solution was condensed by an evaporator and dried at 60°C in vacuo to obtain solid matter. This solid matter was pulverized and powdered and molded into a green body using a compression molding machine. The green body was made to foam by a microwave heating apparatus at an expansion rate of 130X (density: 0.011 g/cm³) to obtain a foam. The foam was heated at 450°C for 15 minutes to obtain a polyimide foam. This polyimide foam was crushed by a crusher to chips of a size of about 5 mm diameter.

The chips were sprayed, while stirring the chips, using as a heat resistant binder a polyamic acid solution having a viscosity of 9 cp obtained by polymerization of a-BPDA and 1,3-bis(4-aminophenoxy)benzene in dimethyl acetoamide at a concentration of 5.5 wt%, in an amount of 27 g of heat resistant binder solution with respect to 15 g of chips and mixed and agitated for about 10 minutes to obtain a mixture of chips and heat resistant binder. The chips of the mixture were charged into a stainless steel mold of a height of 250 mm, a width of 150 mm, and a length of 200 mm and compressed to a height of 200 mm by a pressing lid provided with a gas vent, then the pressing lid was fixed in place. The container was placed in an oven and the content fired at 350°C for 30 minutes. The content was cooled, then the mold was opened and the foamed polyimide shaped article was taken out from the mold. The foamed polyimide shaped article was examined for density (g/cm³), tensile strength, and appearance and change in mass after standing in a 300°C oven for 60 minutes. The results are shown together in Table 1.

### Example 2

The same procedure was followed as in Example 1 to obtain a polyimide foam of an expansion rate of 140X except for using DADE as the diamine component. The same procedure was followed as in Example 1 to obtain a foamed polyimide shaped article except for using this polyimide foam. The foamed polyimide shaped article was examined for density, tensile strength, and appearance and change in mass after standing in a 300°C oven for 60 minutes. The results are shown together in Table 1.

### Example 3

The same procedure was followed as in Example 1 to obtain a foamed polyimide shaped article except for changing the expansion rate. The foamed polyimide shaped article was examined for density, tensile strength, and appearance and change in mass after standing in a 300°C oven for 60 minutes. The results are shown together in Table 1.

### Example 4

The same procedure was followed as in Example 1 to obtain a foamed polyimide shaped article except for using a polyamic acid solution obtained in the same way as Example 1 except for using as the heat resistant binder a composition of an aromatic tetracarboxylic acid component constituted by 80 mol% of a-BPDA and 20 mol% of s-BPDA. The foamed polyimide shaped article was examined for density, tensile strength, and appearance and change in mass (change in weight) after standing in a 300°C oven for 60 minutes. The results are shown together in Table 1.

### Example 5

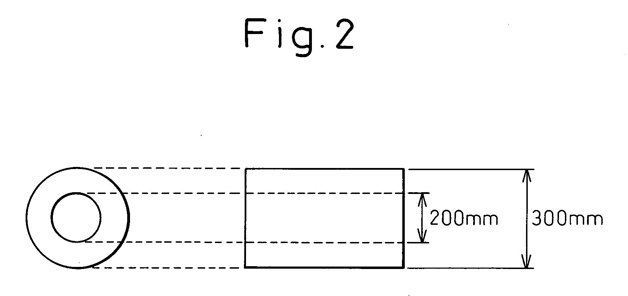

The same procedure was followed as in Example 1 to obtain a foamed polyimide shaped article of the dimensions shown in FIG. 2 except for changing the shape of the mold. The foamed polyimide shaped article was examined for density, tensile strength, and appearance and change in mass after standing in a 300°C oven for 60 minutes. The results are shown together in Table 1.

### Comparative Example 1

As the heat resistant binder, a urethane-based binder was used, 10 wt% of binder was sprayed on the chips, the mold described in Example 1 was used to mold an article of a density of 0.03 g/cm³, then 100°C steam was used for heating to cure the urethane binder and obtain a urethane binder foamed polyimide shaped article. The result was dried according to an ordinary method in a 60°C atmosphere, then evaluated. The results are shown together in Table 1.

**Table 1**

| Ex. | Density | Tensile strength (kPa) | Tensile elongation (%) | 300°C x 60 min heat resistance test | |
|---|---|---|---|---|---|
| | | | | Appearance | Change in weight |
| Ex. 1 | 0.031 | 32.5 | 12.2 | No change | No change |
| Ex. 2 | 0.030 | 30.5 | 11.9 | No change | No change |
| Ex. 3 | 0.016 | 28.1 | 10.8 | No change | No change |
| Ex. 4 | 0.033 | 47.2 | 10.1 | No change | No change |
| Ex. 5 | 0.035 | 48.1 | 10.0 | No change | No change |
| Comp. Ex. 1 | 0.035 | 20.3 | 7.4 | Binder carburization | 10.5% weight loss |
| "No change" refers to 0% loss in mass. | | | | | |

From Table 1, according to Examples 1 to 5, foamed polyimide shaped articles having a density of at least 0.01 g/cm³ to not more than 0.1 g/cm³ and no change in appearance by a heat resistance test at 300°C for 60 minutes, in particular no loss of mass, and having a heat resistance of not more than 1% can be obtained. As opposed to this, according to Comparative Example 1 using a binder with a low heat resistance, a foamed polyimide shaped article partially carburized and changing in appearance and having a loss of mass of more than 1% due to the above heat resistance test and not having heat resistance can be obtained.

### Example 6

The same procedure was followed as in Example 1 to obtain an expansion rate of 130X. The foam was heated at 450°C for 15 minutes to obtain a polyimide foam. This polyimide foam was pulverized to a size of about 5 mm diameter by a crushed to obtain chips.

On the other hand, 11.77 g (0.04 mole) of a-BPDA, 10.01 g (0.05 mole) of 4,4-ODA, and 4.964 g (0.02 mole) of PEPA were heated in 62 g of NMP at 180°C for 4 hours for heat imidization to obtain a powdery end-modified imide oligomer. This oligomer had a theoretical Mn of 2490, an ηinh of 0.10, a Tg (DSC) of 200°C, and a curing heat generation peak of 357°C. The minimum melt viscosity before curing of the end-modified imide oligomer was 14000 poise (316°C). Note that the end-modified imide oligomer was heat cured (380°C x 2 hours) to prepare a cured article (test piece) of a thickness of 3 mm. The flexural strength found by a bending test performed based on ASTM D-790 was 1490 kgf/cm². This cured article had a Tg (DSC) of 375°C and exhibited no heat generation peak. Further, it was insoluble in DMAc, had a modulus of elasticity of 290 kg/mm², a tensile strength of 11.5 kg/mm², an elongation of 20%, and a 5% weight loss temperature by TGA of about 520°C.

For the chips obtained by pulverization of the polyimide foam, the end-modified imide oligomer was used as the heat resistant binder, 3 g of heat resistant binder powder was blended with respect to 15 g of chips, then the chips in which the heat resistant binder were charged into a stainless steel mold of a height of 250 mm, a width of 150 mm, and a length of 200 mm, the height of the chips was compressed to 20 mm by a pressing lid provided with a gas vent, and the pressing lid was fixed in place. The container was placed in an oven and the content fired at 400°C for 30 minutes. The content was cooled, then the foamed polyimide shaped article was taken out from the mold. The foamed polyimide shaped article was examined for density, tensile strength, and appearance and change in mass after standing in a 300°C oven for 60 minutes. The results are shown below:
Density: 0.037 g/cm³
Tensile strength: 31.9 kpa
Tensile elongation: 5.2%
300°C x 60 minute heat resistance test
   Appearance: No change
   Change in weight: No change

### Example 7

The same procedure was followed as in Example 6 to obtain a foamed polyimide shaped article except for changing the amount of the heat resistant binder added from 3 g to 2 g. The foamed polyimide shaped article was examined for density, tensile strength, and appearance and change in mass after standing in a 300°C oven for 60 minutes. The results are shown below:
Density: 0.035 g/cm³
Tensile strength: 22.5 kpa
Tensile elongation: 4.9%
300°C x 60 minute heat resistance test
   Appearance: No change
   Change in weight: No change

### Example 8

The same procedure was followed as in Example 7 to obtain a foamed polyimide shaped article except for using a mold similar to Example 5 as the mold. This foamed polyimide shaped article exhibited similar performance as in Example 7.

While the invention has been described with reference to specific embodiments chosen for purpose of illustration, it should be apparent that numerous modifications could be made thereto by those skilled in the art without departing from the basic concept and scope of the invention.

## Claims

1. A foamed polyimide shaped article obtained by molding and then calcining a mixture of pulverized pieces of a pre-foamed polyimide resin mass and a heat resistant binder.

2. A foamed polyimide shaped article as set forth in claim 1, wherein the pre-foamed polyimide resin mass is comprised of a polymer obtained using as an essential component a 2,3,3',4'-biphenyl tetracarboxylic acid component as an aromatic tetracarboxylic acid component.

3. A foamed polyimide shaped article as set forth in claim 1, wherein the pre-foamed polyimide resin mass is obtained using as a diamine component a diamine having two amino groups in a molecule or an amine compound comprised of a mixture of diamine having two groups and ones having three or more groups.

4. A foamed polyimide shaped article as set forth in claim 1, wherein said heat resistant binder is an end-modified imide oligomer.

5. A foamed polyimide shaped article as set forth in claim 1, wherein said heat resistant binder is an end-modified imide oligomer obtained by reacting a biphenyl tetracarboxylic acid, an aromatic diamine compound, and 4-(2-phenylethynyl)anhydrous phthalic acid and having a logarithmic viscosity (ηinh, 30°C, 0.5 g/100 ml solvent, solvent: N-methyl-2-pyrrolidone) of 0.05 to 1.

6. A foamed polyimide shaped article as set forth in claim 1, wherein the heat resistant binder is an end-modified imide oligomer of the formula: 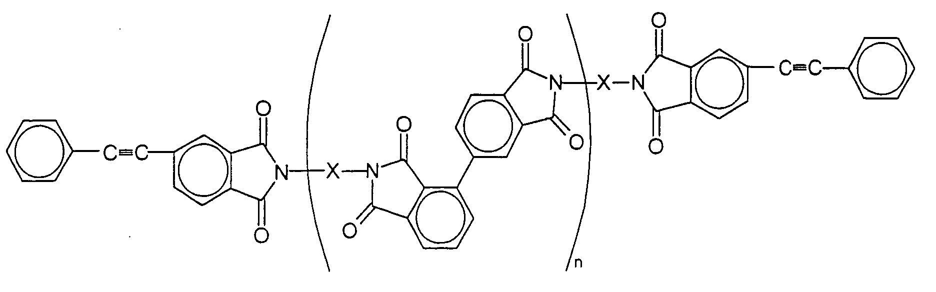 (wherein, X is an aromatic diamine residual group and n is an integer).

7. A foamed polyimide shaped article as set forth in claim 1, wherein the heat resistant binder has a melt viscosity at the temperature of use of 1 to 1000000 poise.

8. A foamed polyimide shaped article as set forth in claim 1, wherein the heat resistant binder has a glass transition temperature (Tg) of at least 300°C after calcining (curing by heating) and a flexural strength of at least 1300 kgf/cm².

9. A foamed polyimide shaped article as set forth in claim 1, wherein the heat resistant binder is mixed into the pulverized pieces of the pre-foamed polyimide resin mass at a ratio of 2 to 30 wt%.

10. A foamed polyimide shaped article as set forth in claim 1, having a heat resistance free from changes in appearance after a heat resistance test at 300°C for 60 minutes.

11. A foamed polyimide shaped article as set forth in claim 1, wherein the density is 0.01 to 0.8 g/cm³.

12. A process for production of a foamed polyimide shaped article comprising pulverizing a pre-foamed polyimide resin mass, mixing the pulverized pieces with a heat resistant binder, molding the mixture to a predetermined shape, then calcining it at a temperature of at least 350°C to cure the binder and strongly bond the polyimide foam mass.

13. A process for production of a foamed polyimide shaped article as set forth in claim 12, wherein the heat resistant binder has a melt viscosity at the temperature of use of 1 to 1000000 poise.

14. A process for production of a foamed polyimide shaped article as set forth in claim 12, wherein the heat resistant binder is a polyamic acid obtained using as an essential component a 2,3,3',4'-biphenyl tetracarboxylic acid component as an aromatic tetracarboxylic acid component.

15. A process for production of a foamed polyimide shaped article as set forth in claim 12, wherein the pre-foamed polyimide resin mass has a density of 0.0005 to 0.1 g/cm³.
